# EUROPEAN PATENT SPECIFICATION

(11) **EP 2 320 203 B1**
(45) Date of publication and mention of the grant of the patent: **12.12.2012**
(21) Application number: 10189231.3
(22) Date of filing: 28.10.2010
(51) Int. Cl.: G01H 1/00, G01M 13/02, G01B 11/27

(54) **Vibration measurement device and method**
Vibrationsmessungsvorrichtung und -verfahren
Dispositif et procédé de mesure de vibrations

(30) Priority: 05.11.2009 DE 102009053132
(43) Date of publication of application: 11.05.2011
(73) Proprietor: Prüftechnik Dieter Busch AG, 85737 Ismaning (DE)
(72) Inventor: Busch, Dieter, 85737, Ismaning (DE); Becker, Edwin, 48734, Reken (DE); Lösl, Johann, 84172, Buch am Erlbach (DE); Lysen, Heinrich, 85748, Garching (DE)
(74) Representative: Schwan - Schwan - Schorer

(56) References cited:
- DE-A1-102006 015 461
- US-A- 4 984 173
- US-A1- 2005 018 537

## Description

The invention relates to a device and a method for measurement of vibrations at a non-rotating part of a rotating machine.

Devices are known with which alignment for example of two shafts to one another can be measured. In machinery, motors for example drive pumps, the relative alignment from the motor to generally heavier pumps having a major effect on the service life of the entire machine and its components. These devices contain an electronic evaluation device, a first optoelectronic transmitting and/or receiving unit and a second optoelectronic transmitting and/or receiving unit or a reflector instead of the second transmitting and/or receiving unit. These devices are described for example in EP 0 145 745 or EP 0 367 814.

Moreover, devices are known with which vibration measurements are taken and to which an optoelectronic transmitting and/or receiving unit (hereinafter also called an alignment sensor) of an alignment device, as is described in the aforementioned patents, can be connected. In this case, in the past the vibration sensor and the sensor of the alignment device had always been connected separately to the electronic evaluation device. These combined devices for alignment and for vibration measurement are available for example from the applicant under the name smartSCANNER. Both alignment sensors like the first optoelectronic transmitting and/or receiving unit and a second optoelectronic transmitting and/or receiving unit (which can also be omitted when using a reflector) as well as vibration sensors can be connected to the electronic evaluation unit of the smartSCANNER. An inclinometer is contained in at least one of the two optoelectronic transmitting and/or receiving units.

These devices are suitable for taking both alignment measurements and also vibration measurements, but entail problems in reliable handling and in evaluation of the measured data. When the machine is shut down, alignment measurements are taken. Afterwards misalignment which may be present is corrected. These activities are often undertaken in a production shutdown, therefore on the weekend or at night. After restarting the machine it is a good idea to take a vibration measurement in operation.

As a result of more difficult working conditions at unusual times it can happen that the optoelectronic transmitting and/or receiving units are forgotten on the shafts of the machine during dismounting after completion of the alignment procedure and are damaged when the machine is started up again. Moreover fatigued personnel often have difficulties in distinguishing or correctly assigning the directions for measurements of vibrations of the axial direction and vibrations of the radial direction in vibration measurement. This also applies especially when the personnel are not adequately trained or are fatigued. Furthermore, it is difficult to bring the corrected alignment which has been determined using the measurement device into agreement with the vibration picture. Moreover data which enable this assignment of alignment and vibration data with respect to each other, such as tolerance data or reference spectra of vibration pictures, are often contained in extensive databases which are stored on remote computers and whose contents are not available at all to personnel at the facility at this time or cannot be easily found.

Ii is an object of the invention to provide for a machine vibration measurement device which can be handled in a particularly simple manner, while being of relatively low complexity. It is also an object to provide for a corresponding vibration measurement method.

According to the invention, these objects are achieved by a device as defined in claim 1 and a method as defined in claim 9.

The invention is beneficial in that, by providing the device with an accelerometer/inclinometer sensor for measuring acceleration forces resulting from the machine vibrations and for also measuring gravity and by determining the orientation of the sensor with regard to gravity from the stationary component of the sensor output and evaluating the non-stationary components of sensor output at according to the determined sensor orientation, the measurement procedure is simplified, since the device, due to the integrated inclinometer function, is able to determine the orientation of the sensor with regard to gravity in the measurement position and to automatically interprete/evaluate the acceleration measurement data accordingly, without the need for an additional inclinometer to be added to the accelerometer sensor.

According to one embodiment, the device comprises a first optoelectronic transmitting and/or receiving unit in a first housing, a second optoelectronic transmitting and/or receiving unit with a housing or a reflector in a second housing, and at least one of the optoelectronic transmitting and/or receiving units being connected to the electronic evaluation unit, and wherein the sensor is connected to one of the optoelectronic transmitting and/or receiving units. Such embodiment addresses the problem that different electronic component are required for vibration measurement devices and alignment sensors for the evaluation of the signals of vibration sensors, optical position detectors and inclinometers before the signals can be further processed in the central processor of the electronic output unit. Such embodiments involve simplification of the handling of the measurement device and its parts by one of the two optoelectronic transmitting and/or receiving units which are necessary for alignment also being used to take the vibration measurement.

According to one embodiment, data determined from the sensor output is used to determine a characteristic for the quality of alignment of the machine. Simplification of the measurement process can be achieved in that the measurement device displays a characteristic for the combination of the alignment quality and the vibration picture and it is further communicated to the user on the display of the measurement device how many of the data necessary for determining of the characteristics have been recorded. This characteristic is displayed to the personnel in an easily accessible and understandable form. Thus, prompt and simple joint evaluation of the result of the alignment process and of the vibration picture becomes possible.

Simplification of handling may be achieved by the vibration sensor (i.e. the accelerometer/inclinometer sensor) being connected not to the electronic evaluation unit, as in the past, but directly to the alignment sensor, or its preferably being installed in the alignment sensor. This results in that the operators are forced to handle the alignment sensor in the preparation of the vibration measurements after completed alignment. Thus the alignment sensor cannot be forgotten on the machine. This embodiment may be further improved by the second measure of display of the degree of detection of a common characteristic for the alignment as claimed in the invention and for the vibration picture and display of this characteristic.

In the combination of the vibration sensor and alignment sensor, a further increase of reliability and simplification in operation is achieved in that the accelerometer/inclinometer sensor contained in at least one of the two optoelectronic transmitting and/or receiving units also enables checking of the alignment of the accelerometer/inclinometer sensor in the vibration measurement, especially whether alignment of the accelerometer/inclinometer sensor is in the axial direction to the aligned shafts or in the radial direction to them. In this way the reliability of the determined vibration data is greatly increased.

Preferably, the accelerometer/inclinometer sensor is made as a MEMS module. Preferably, the accelerometer/inclinometer has two or three measurement axes, thereby enabling a two- or three-dimensional inclinometer function and two- or three-axes vibration measurements.

Another option for simplification of operation and handling of this combined vibration and alignment device is the display of an easily understandable value in the form of a characteristic with which a prompt and reliable conclusion about the instantaneous vibration state and the success of the alignment measure is made available to the operators. This factor also encompasses the fact that the personnel of a combined alignment and vibration measurement device on the display of the electronic evaluation device are also notified of how many of the data required for determining this characteristic have been recorded with the device.

The common characteristic for alignment and the vibration picture takes into account the values measured after alignment with the alignment sensor and the alignment tolerances as well as the vibration picture after restarting the machine. For detection and numerical description of this vibration picture different vibration characteristics can be used. These vibration characteristics can be the following: the ratio of the vibration intensity measured in the radial direction to the vibration intensity measured in the axial direction, the ratio of the vibration signal measured at the current rotary frequency of the machine to the vibration signal measured at the harmonic of the current rotary frequency, the ratio of the vibration signal in operation of the machine before alignment to the vibration signal recorded under comparable conditions in the operation of the machine after alignment.

Examples of the invention are illustrated by reference to the attached drawings, wherein:
- Fig. 1: shows an example of an alignment device with two optoelectronic transmitting and receiving units, including a vibration measurement device according to the invention;
- Fig. 2: shows an example of an alignment device with one optoelectronic transmitting and receiving unit and a reflector, including a vibration measurement device according to the invention;
- Fig. 3: shows an example of an alignment device with one optoelectronic transmitting unit and one optoelectronic receiving unit, including a vibration measurement device according to the invention;
- Fig. 4: shows a table which contains the alignment tolerances for the offset values determined with the alignment devices of Figures 1-3; and
- Figs. 5a and 5b: show an example of a vibration measurement device according to the invention which is not used in combination an alignment device in a lateral view and a front view, respectively.

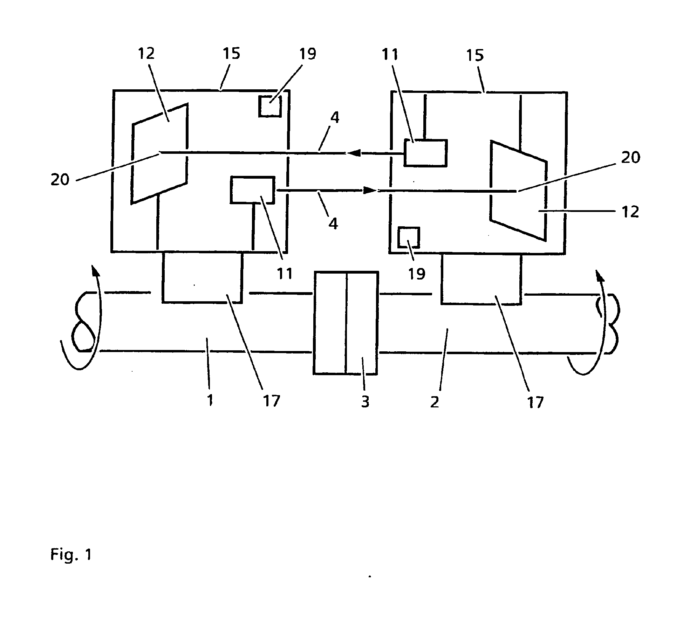

Figure 1 shows a conventional alignment device which is attached to two horizontally positioned shafts 1, 2 which are connected to each other by means of a coupling 3. The two shafts can belong for example to a motor and a pump which is driven by this motor and which is a component of a larger machine. On holding devices 17 housings 15 are attached to these shafts and in the housings one light source 11 and one one- or two-dimensionally readable photosensitive sensor 12 at a time are installed. This attachment takes place such that one light source is always opposite a sensor. In the alignment measurement each light source 11 emits a light beam 4 which is received on the detector 12 and whose incidence position 20 is electronically evaluated in order to determine and if necessary correct the offset of the two shafts 1 and 2. At least one of these housings 15 contains an accelerometer/inclinometer sensor 19 which is used both for vibration measurements and for inclinometer measurements.

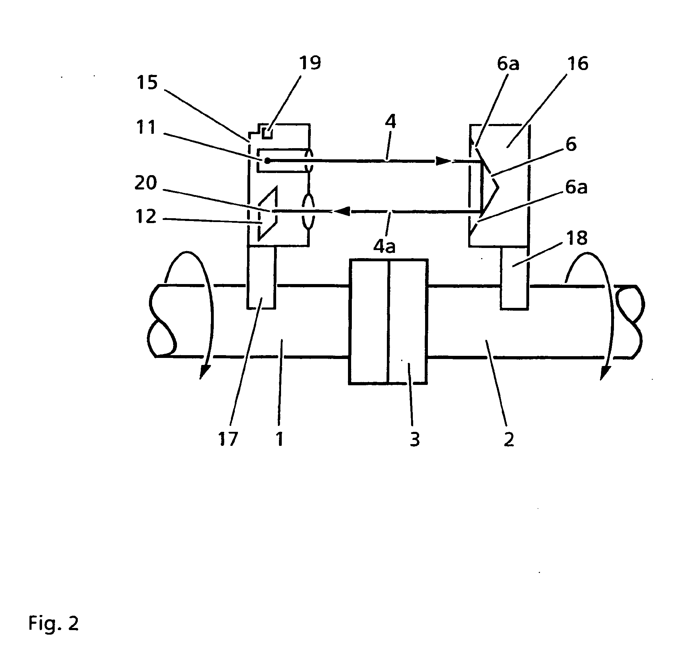

Figure 2 describes a simpler alignment device in which the transmitting and receiving unit on the shaft 1 corresponds essentially to the embodiment of Figure 1. Instead of a second transmitting and receiving unit however a reflector 6 is mounted on the shaft 2 and reflects the light beam 4 which has been emitted from the light source 11 as the light beam 4a onto the detector 12. The reflector 6 is located in its own housing 16 on a holding device 18. In the transmitting and receiving unit there is a MEMS accelerometer/inclinometer sensor 19 which is used both for vibration measurement and for inclinometer measurements. Here the fact is used that an inclinometer which is actually used to display the direction relative to the direction of gravitational acceleration and which responds in the frequency range of a few Hertz or fractions of a Hertz can also be used as an accelerometer, for an acceleration measurement perpendicular to the direction of gravitational acceleration. For vibration measurements the upper limits of the response frequencies of 10, 20 or even 40 kHz are conventionally used. Thus, for the choice of a combined inclinometer and accelerometer a frequency range of almost 0 Hz to 10 kHz or more is feasible. This frequency range is easily attainable with modem MEMS modules. A suitable MEMS accelerometer/inclinometer sensor module is available, for example, as model ADXL326 from the company Analog Devices, Norwood, MA02062-9106, USA. From the stationary component of the sensor output (e.g. up to frequencies of a few Hertz) the sensor orientation with regard to gravity can be determined, i.e. the sensor is used as an inclinometer, and from the non-stationary components of the sensor output (e.g. up to 10kHz) is used for vibration measurements, i.e. the sensor is used as an accelerometer.

It is simply necessary to consider the directional behavior of the module when the inclinometer is installed or the vibration sensor is placed on the machine. For the inclinometer this is directly considered during installation, when the vibration sensor is placed on the machine alignment of the sensor can preferably take place, as is described in EP 0 999 433 A2. The alignment of the sensor is displayed on the display of the computer for the user there.

The MEMS inclinometer 19 is mounted in the vicinity of one corner of the housing 15. So that it is possible to place the housing of the transmitting and receiving unit on a machine to be measured, this corner is provided with one or more guide edges, guide surfaces or guide bezels and is shaped to the inside, as indicated in Figure 2. Here the guide edges or guide bezels need not necessarily be straight, as in the figure. There can also be angles other than 90° between the guide edges or guide bezels. If for example there are three guide surfaces, one corner of the housing is turned up so to speak to the inside and acquires the shape of a triple mirror. So that the guide surfaces, edges or bezels enable good coupling to the machine to be measured for vibration measurement, they are preferably convexly curved.

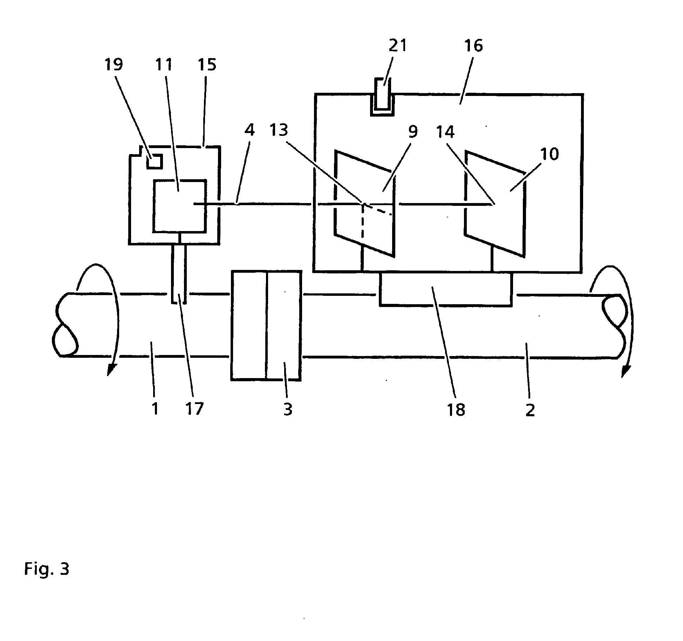

Figure 3 shows another embodiment of the invention. Here a housing 15 which is attached to the shaft 1 with a holding device 17 contains a light source 11 which emits a light beam 4. This light beam is received in a first detector 9 mounted on the shaft 2 with a holding device 18 in a housing 16, and a second detector 10. These detectors are mounted in succession in the beam path. If the detector 9 which is located nearer the entry opening in the beam path is not transparent enough, the attachment of the two detectors at different distances to the light source 11 can be accomplished for example by means of a beam splitter. The housing 15 again contains an inclinometer 19. In one recess of the housing 16 a accelerometer/inclinometer vibration sensor 21 or a probe tip is inserted in order to take the vibration measurement. Conventionally the optoelectronic receiving unit in the housing 16 is attached with two rods to a clamping device 18 on the shaft to be aligned which has a prism-shaped depression for adaptation to the shaft. The two rods extend parallel to one another from this clamping device and parallel to a line which runs radially to the shaft. Accordingly the housing 16 has two openings which penetrate the housing to hold the rods. The housing 16 and the optoelectronic receiving device contained in it are then fixed at a certain distance to the shaft, for example by way of clamping screws. These openings can be feasibly used for inserting a vibration sensor by for example their inner sides being provided with electrical contacts. When the corresponding contacts on the vibration sensor 21 to be inserted are pressed to the outside with springs, reliable electrical contact-making is achieved. As is described below, in one preferred configuration the vibration sensor is made as a two-axle or three-axle vibration sensor. In another configuration the vibration sensor is integrated into the housing and permanently installed. A probe tip is inserted into an opening provided for this purpose in the vicinity of this integrated vibration sensor. This probe tip is suitable only for recording vibration signals in one dimension.

All alignment devices of Figures 1 to 3 also contain an electronic evaluation unit which was not shown here. The transmitting and/or receiving units are connected by means of cables or wirelessly to this evaluation unit. This electronic evaluation unit is used for communication with the operators. How many of the data to be recorded have already been determined is communicated to the user on the display of this evaluation unit. Typically, working with this device begins with determination of the alignment when the system is shut down. Afterwards this alignment is corrected. The success of this correction is displayed on the display of the evaluation unit in the form of a comparison between the alignment tolerances and the determined offset values.

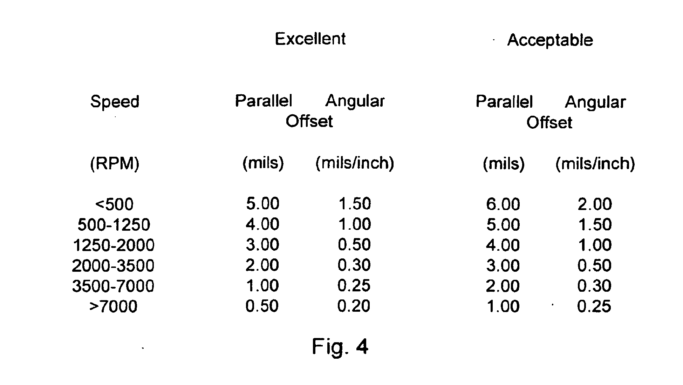

When the alignment process has been completed and the offset values are within the alignment tolerances, a characteristic which is a measure of the success of the just completed alignment process, therefore an alignment characteristic, is displayed to the operators on the display of the electronic evaluation device. Figure 4 shows a table with allowable tolerance values dependent on the shaft rpm. When the values for the offset are smaller after alignment than the tolerance values shown in Figure 4 with the pertinent heading "Excellent", the alignment characteristic can be for example in the region of 100. Maintaining the tolerance values labeled "Acceptable" in Figure 4 can for example cause an alignment characteristic in the vicinity of 50. Values for the offset which are outside of this tolerance lead to an evaluation of the alignment with a characteristic near zero.

It is furthermore indicated that at this point only some of the tasks to be performed with the measurement device have been completed. This indication can take place for example in the form of a bar and/or a percentage. This indication is designed to signal to the personnel that a vibration measurement must still be taken when the system has been started again. If after completion of the alignment process on the display of the electronic evaluation unit it is signalled that only part of the measurement task has been completed, this is a reason for the operators to remove the optoelectronic transmitting and/or receiving units from the shafts of the machine. In this way the process becomes safer. Damage to the measurement device can thus be avoided since the alignment sensors cannot be inadvertently forgotten on the shafts. The personnel thereupon prepare the alignment sensor for a vibration sensor or a probe tip to be connected to the alignment sensor when the vibration sensor is not integrated in the alignment sensor anyway.

Afterwards the machine is started again. When the machine is running, best at nominal rpm and after the completed warm-up phase, a vibration measurement can be taken with the alignment sensor and the vibration sensor. This vibration measurement best takes place once in the radial direction with reference to the two shafts which are aligned to one another and a second time in the axial direction with reference to the shafts which are aligned to one another. Advantageously this measurement can be taken with a single vibration sensor which is sensitive to vibrations in two or three spatial axes. A vibration characteristic can now be computed from the result of this vibration measurement or several measurements. This vibration characteristic can contain the ratio of the axial vibration to the radial vibration. If prior to beginning the alignment process with the machine still running a vibration measurement has already been taken, this vibration measurement can likewise be used for formation of the vibration characteristic. One example is the ratio of the vibration intensity in operation before alignment to the vibration intensity in operation after alignment. To compute the vibration characteristic, measurements in the radial and axial direction after alignment can also be used and are combined with measurements in the radial and axial direction before alignment in order to obtain a vibration characteristic.

The evaluation unit is for determining the orientation of the sensor with regard to gravity from the stationary component of the sensor output and for evaluating the non-stationary components of the sensor output, i.e. the vibration signals, according to the determined sensor orientation. In particular, the evaluation unit is adapted to transform the acceleration values measured along the measurement axes into acceleration values along the vertical axis and along two orthogonal horizontal axes.

When these procedures are completed, in the electronic evaluation unit the degree of execution of the tasks to be performed with the measurement device is set such that at this point all activities are considered completed. A graphic representation on the display of the electronic evaluation unit as a bar is complete, a percentage displayed there is now 100.

Moreover, in the memory of the electronic evaluation unit two characteristics are now stored, specifically on the one hand the alignment characteristic and on the other hand the vibration characteristic. These two characteristics can be normalized in a suitable manner. An alignment characteristic of 100 can for example constitute perfect alignment, an alignment characteristic near zero can mean very poor alignment. The vibration characteristic can be similarly normalized so that a vibration characteristic of 100 constitutes a good vibration picture, while a vibration characteristic near zero represents a poor vibration picture. As claimed in the invention, the ratio of the alignment characteristic to the vibration characteristic or the inverse thereof is displayed as a fraction on the display of the electronic evaluation direction. With this display as a fraction, it is also possible by computation to combine these two characteristics into one. Thus with the aforementioned sample values a ratio near the number one or 100% would constitute a roughly equally good result for the process of alignment and for the vibration picture. In addition the numerators and denominators of the fraction indicate how successful the process of alignment was or how good the vibration picture present after alignment is. A display of the two values of the numerator and denominator of the fraction further facilitates handling of the device for the operators.

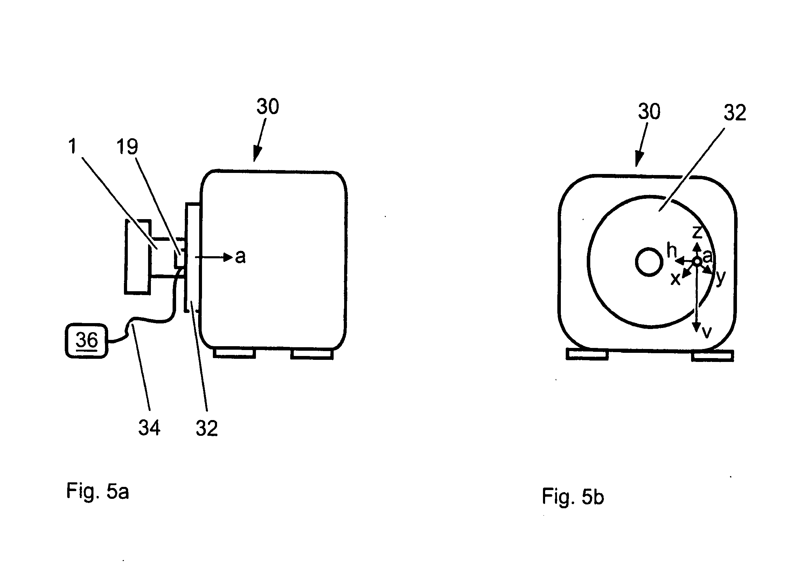

In Figs. 5a and 5b an example of a vibration measurement device according to the invention is shown which is not used in combination an alignment device. In the example of Fig. 5 an accelerometer/inclinometer vibration sensor 19 is positioned at a non-rotating part 32, e.g. a bearing cover, of a machine 30 comprising a rotating part, such as a shaft 1, for conducting vibration measurements during operation of the machine 30. Preferably, the sensor 19 is fixed at the machine part 32 via a magnetic holder. The sensor 19 is connected via a cable 34 to an electronic evaluation unit 36.

The evaluation unit determines the orientation of the sensor 19 with regard to gravity from the stationary component of the sensor output and evaluates the non-stationary components of the sensor output, i.e. the vibration signals, according to the determined sensor orientation. In particular, the evaluation unit transforms the acceleration values measured along the measurement axes *x, y, z* of the sensor 19 into acceleration values along the vertical axis v, a horizontal axis h and an axial *axis a* of the machine (the axial axis *a* is also horizontal but orthogonal to horizontal axis labelled *h).* The measurement device as such cannot distinguish between horizontal directions h and a based on the inclinometer signal; rather, by the positioning the sensor 19 at a surface parallel or perpendicular to the axis *a* of the rotating part 1, one of the horizontal directions, namely the axial axis *a,* is defined; the other horizontal direction then is assumed to be the axis h.

Thus, the measurement device supports the user by automatically recognizing the vertical axis *v* based on the inclinometer signal provided by the sensor 19, so that the user does not have to care about the positioning of the sensor 19 with regard to vertical. Thereby, at least as far as the vertical axis is concerned, the measurement device is able to automatically recognize different measurement positions at the machine.

## Claims

1. A device for vibration measurement at a non-rotating part (32) of a rotating machine (1, 2, 30), comprising an accelerometer/inclinometer sensor (19, 21) for measuring acceleration forces resulting from machine vibrations to be measured and for measuring gravity and an electronic evaluation unit (36) supplied with the sensor output and adapted to determine the orientation of the sensor with regard to gravity from the stationary component of the sensor output and to evaluate the non-stationary components of the sensor output according to the determined sensor orientation.

2. The device of claim 1, further comprising a first optoelectronic transmitting and/or receiving unit (9, 11, 12) in a first housing (15, 16), a second optoelectronic transmitting and/or receiving unit (9, 11, 12) with a housing or a reflector in a second housing (15, 16), and at least one of the optoelectronic transmitting and/or receiving units being connected to the electronic evaluation unit, and wherein the sensor (19, 21) is connected to one of the optoelectronic transmitting and/or receiving units.

3. The device of claim 2, wherein the sensor (21) is connected to the optoelectronic transmitting and/or receiving unit (9, 10, 16) with a plug-in capacity.

4. The device of claim 2, wherein the sensor (19, 21) is installed in the housing (15, 16) of the first optoelectronic transmitting and/or receiving unit (9, 11, 12, 15, 16).

5. The device of one of the preceding claims, wherein the sensor (19, 21) has three orthogonal measurement axes.

6. The device of claim 5, wherein the electronic evaluation unit (36) is adapted to transform the acceleration values measured along the measurement axes (*x, y, z*) into acceleration values along the vertical axis (*v*) and along two orthogonal horizontal axes (*a*, *h*).

7. The device of one of the preceding claims, wherein the sensor (19,21) is a MEMS sensor.

8. The device of one of the preceding claims, wherein the sensor (19, 21) is to be coupled to the machine (30) which is to be measured via a probe tip.

9. A method for measuring vibrations, comprising measuring, by an accelerometer/inclinometer sensor (19, 21) coupled to a non-rotating part (32) of a rotating machine (1, 2, 30), gravity forces and acceleration forces resulting from machine vibrations, determining the orientation of the sensor with regard to gravity from the stationary component of the sensor output, and evaluating the non-stationary components of the sensor output according to the determined sensor orientation.

10. The method of claim 9 , wherein data determined from the sensor output is used to determined a characteristic for the quality of alignment of the machine (1, 2, 30).

11. The method of claim 10, wherein the characteristic is formed from the ratio of a vibration characteristic measured in the axial direction of a rotating part (1, 2) of the machine to this vibration characteristic measured in a radial direction.

12. The method of claim 10 or 11, wherein the characteristic is formed from the ratio of the vibration characteristic before alignment to this vibration characteristic after alignment.

13. The method of one of claims 10 to 12, wherein the characteristic is formed from the ratio of a vibration characteristic measured at a rotary frequency to the vibration characteristic measured at a harmonic of this rotary frequency.

14. The method of one of claims 10 to 13, wherein the offset values measured by an alignment sensor are considered in the formation of the characteristic.

15. The method of one of claims 10 to 14, wherein the alignment tolerances are considered in the formation of the characteristic.

## Patentansprüche

1. Vorrichtung zur Messung von Schwingungen an einem nicht rotierenden Teil (32) einer rotierenden Maschine (1, 2, 30),umfassend
einen Akzelerometer/Inklinometer-Sensor (19, 21) zur Messung von Beschleunigungskräften, die aus zu messenden Maschinenschwingungen entstehen, und zur Messung der Schwerkraft und
eine elektronische Auswertungseinheit (36), der der Sensorausgang zugeführt wird und die eingerichtet ist, um die Orientierung des Sensors zur Schwerkraft zu bestimmen aus der stationären Komponente des Sensorausgangs und um die nichtstationären Komponenten des Sensorausgangs entsprechend der bestimmten Sensororientierung auszuwerten.

2. Vorrichtung nach Anspruch 1, weiter umfassend eine erste optoelektronische Sende- und/oder Empfangseinheit (9, 11, 12) in einem ersten Gehäuse (15, 16),
eine zweite optoelektronische Sende- und/oder Empfangseinheit (9, 11, 12) mit einem Gehäuse oder einen Reflektor in einem zweiten Gehäuse (15, 16), wobei mindestens eine der optoelektronischen Sende- und/oder Empfangseinheiten mit der elektronischen Auswertungseinheit verbunden ist und wobei der Sensor (19, 21) mit einer der optoelektronischen Sende - und/oder Empfangseinheiten verbunden ist.

3. Vorrichtung nach Anspruch 2, wobei der Sensor (21) mit der optoelektronischen Sende- und/oder Empfangseinheit steckbar verbunden ist.

4. Vorrichtung nach Anspruch 2, wobei der Sensor (19, 21) im Gehäuse (15, 16) der ersten optoelektronischen Sende- und/oder Empfangseinheit (9, 11, 12, 15, 16) angeordnet ist.

5. Vorrichtung nach einem der vorhergehenden Ansprüche, wobei der Sensor (19, 21) über drei orthogonale Messachsen verfügt.

6. Vorrichtung nach Anspruch 5, wobei die elektronische Auswerteeinheit (36) eingerichtet ist, um die in Richtung der Messachsen (x, y, z) gemessenen Beschleunigungswerte in Beschleunigungswerte in Richtung der vertikalen Achse (v) und zweier orthogonaler horizontaler Achsen (a, h) zu transformieren.

7. Vorrichtung nach einem der vorhergehenden Ansprüche, wobei der Sensor (19, 21) ein MEMS-Sensor ist.

8. vorrichtung nach einem der vorhergehenden Ansprüche, wobei der Sensor (19, 21) mit einer Tastsonde an die Maschine (30) gekoppelt wird.

9. Verfahren zur Messung von Schwingungen, das umfasst:
Messung von Schwerkräften und Beschleunigungskräften, die aus Maschinenschwingungen entstehen, mittels eines Akzelerometer/Inklinometer-Sensors (19, 21), der an ein nicht rotierendes Teil (32) einer rotierenden Maschine (1, 2, 30) gekoppelt ist,
Bestimmung der Orientierung des Sensors zur Schwerkraft aus der stationären Komponente des Sensorausgangs und
Auswertung der nichtstationären Komponenten des Sensorausgangs entsprechend der bestimmten Sensororientierung.

10. Verfahren nach Anspruch 9, wobei Daten, die aus dem Sensorausgang bestimmt werden, zur Bestimmung einer Kennzahl der Ausrichtqualität der Maschine (1, 2, 30) verwendet werden.

11. Verfahren nach Anspruch 10, wobei die Kennzahl gebildet wird aus dem Verhältnis einer Schwingungskennzahl, die in axialer Richtung eines rotierenden Teils (1, 2) der Maschine gemessen wurde zu dieser Schwingungskennzahl, die in radialer Richtung gemessen wurde.

12. Verfahren nach Anspruch 10 oder 11, wobei die Kennzahl gebildet wird aus dem Verhältnis der Schwingungskennzahl vor dem Ausrichten zu dieser Schwingungskennzahl nach dem Ausrichten.

13. verfahren nach einem der Ansprüche 10 bis 12, wobei die Kennzahl gebildet wird aus dem Verhältnis einer Schwingungskennzahl, die bei einer Drehfrequenz gemessen wird, zur Schwingungskennzahl, die bei einer Harmonischen dieser Drehfrequenz gemessen wird.

14. Verfahren nach einem der Ansprüche 10 bis 13, wobei die mit dem Ausrichtsensor bestimmten Versatzwerte bei der Bildung der Kennzahl berücksichtigt werden.

15. Verfahren nach einem der Ansprüche 10 bis 14, wobei die Ausrichttoleranzen bei der Bildung der Kennzahl berücksichtigt werden.

## Revendications

1. Dispositif pour mesurer les vibrations sur une partie non rotative (32) d'une machine rotative (1, 2, 30), comprenant un capteur d'accéléromètre/inclinomètre (19, 21) pour mesurer les forces d'accélération résultant des vibrations de machine à mesurer et pour mesurer la gravité, et une unité d'évaluation électronique (36) fournie avec la sortie du capteur et adaptée pour déterminer l'orientation du capteur par rapport à la gravité à partir de la composante stationnaire de la sortie de capteur et pour évaluer les composantes non stationnaires de la sortie de capteur selon l'orientation déterminée du capteur.

2. Dispositif selon la revendication 1, comprenant en outre une première unité de transmission et/ou de réception optoélectronique (9, 11, 12) dans un premier boîtier (15, 16), une seconde unité de transmission et/ou de réception optoélectronique (9, 11, 12) avec un boîtier ou un réflecteur dans un second boîtier (15, 16), et au moins une des unités de transmission et/ou de réception optoélectroniques étant connectées à l'unité d'évaluation électronique, et où le capteur (19, 21) est connecté à une des unités de transmission et/ou de réception optoélectroniques.

3. Dispositif selon la revendication 2, dans lequel le capteur (21) est connecté à l'unité de transmission et/ou de réception optoélectronique (9, 10, 16) par une prise.

4. Dispositif selon la revendication 2, dans lequel le capteur (19, 21) est installé dans le boîtier (15, 16) de la première unité de transmission et/ou de réception optoélectronique (9, 11, 12, 15, 16).

5. Dispositif selon l'une des revendications précédentes, dans lequel le capteur (19, 21) a trois axes de mesure orthogonaux.

6. Dispositif selon la revendication 5, dans lequel l'unité d'évaluation électronique (36) est adaptée pour transformer les valeurs d'accélération mesurées le long des axes de mesure (x, y, z) en valeurs d'accélération le long de l'axe vertical (v) et le long de deux axes horizontaux orthogonaux (a, h).

7. Dispositif selon l'une quelconque des revendications précédentes, dans lequel le capteur (19, 21) est un capteur MEMS.

8. Dispositif selon l'une quelconque des revendications précédentes, dans lequel le capteur (19, 21) doit être couplé à la machine (30) qui doit être mesurée par l'intermédiaire d'une pointe-sonde.

9. Méthode pour mesurer des vibrations comprenant de mesurer, par un capteur d'accéléromètre/inclinomètre (19, 21) couplé à une partie non rotative (32) d'une machine rotative (1, 2, 30), des forces de gravité et des forces d'accélération résultant des vibrations de la machine, de déterminer l'orientation du capteur par rapport à la gravité à partir de la composante stationnaire de la sortie de capteur, et d'évaluer les composantes non stationnaires de la sortie de capteur selon l'orientation déterminée du capteur.

10. Méthode selon la revendication 9, dans laquelle des données déterminées à partir de la sortie de capteur sont utilisées pour déterminer une caractéristique pour la qualité de l'alignement de la machine (1, 2, 30).

11. Méthode selon la revendication 10, dans laquelle la caractéristique est formée à partir du rapport d'une caractéristique de vibration mesurée dans la direction axiale d'une partie rotative (1, 2) de la machine sur sa caractéristique de vibration mesurée dans une direction radiale.

12. Procédé selon la revendication 10 ou la revendication 11, dans lequel la caractéristique est formée à partir du rapport de la caractéristique de vibration avant l'alignement sur cette caractéristique de vibration après l'alignement.

13. Procédé selon l'une des revendications 10 à 12, dans lequel la caractéristique est formée à partir du rapport d'une caractéristique de vibration mesurée à une fréquence de rotation sur la caractéristique de vibration mesurée à une harmonique de cette fréquence de rotation.

14. Procédé selon l'une des revendications 10 à 13, dans lequel les valeurs de décalage mesurées avec le capteur d'alignement sont prises en compte dans la formation de la caractéristique.

15. Procédé selon l'une des revendications 10 à 14, dans lequel les tolérances d'alignement sont prises en compte dans la formation de la caractéristique.
